# FASCICULE DE BREVET EUROPEEN

(11) **EP 2 381 251 B1**
(45) Date de publication et mention de la délivrance du brevet: **06.11.2019**
(21) Numéro de dépôt: 11161558.9
(22) Date de dépôt: 07.04.2011
(51) Int. Cl.: G01N 29/22, G01N 29/265, G01N 29/28, G01B 17/02, G01N 29/44

(54) **Dispositif et procédé de contrôle non destructif pour détecter d'éventuelles anomalies d'épaisseur d'une paroi d'un tube**
Vorrichtung und Verfahren zur zerstörungsfreien Erkennung von Dicke-Anomalien einer Rohrwand
Device for and method of non-destructively detecting thickness anomalies of a tube wall

(30) Priorité: 20.04.2010 FR 1053003
(43) Date de publication de la demande: 26.10.2011
(73) Titulaire: ENGIE, 92400 Courbevoie (FR); Institut de Soudure, 93420 Villepinte (FR)
(72) Inventeur: Gueugnaut, Dominique, 75005, Paris (FR); Raze, Stéphane, 75020, Paris (FR); Chauveau, Daniel, 60300, Aumont en Halatte (FR); Flotte, Didier, 57070, Metz (FR)
(74) Mandataire: Novagraaf Technologies

(56) Documents cités:
- EP-A2- 0 882 947
- US-A- 4 055 990
- US-A- 4 202 216
- US-A- 4 302 976
- US-A- 4 566 332
- US-A- 5 313 950
- US-A- 5 492 012
- US-A1- 2003 188 589
- MAK ET AL: "Ultrasonic methods for measuring crack location, crack height and crack angle", ULTRASONICS, IPC SCIENCE AND TECHNOLOGY PRESS LTD. GUILDFORD, GB, vol. 23, no. 5, 1 septembre 1985 (1985-09-01), pages 223-226, XP025748140, ISSN: 0041-624X, DOI: 10.1016/0041-624X(85)90017-4 [extrait le 1985-09-01]

## Description

L'invention concerne, de façon générale, les techniques de contrôle non destructif.

Plus précisément, l'invention concerne, selon un premier aspect, un dispositif de contrôle non destructif conçu pour détecter d'éventuelles anomalies d'épaisseur d'une paroi, ce dispositif incluant au moins un capteur comprenant des moyens d'émission et de réception conçus pour émettre et recevoir des ondes ultrasonores suivant une direction choisie dans un ensemble comprenant au moins une première direction, et des moyens de couplage propres à transmettre en fonctionnement lesdites ondes ultrasonores à une surface de la paroi à contrôler.

Par "anomalies d'épaisseur d'une paroi ", on entend ici des variations franches et locales d'épaisseur de cette paroi, ou des défauts de compacité de type rayures, fissures ou entailles.

Un dispositif de ce type est par exemple décrit dans le document de brevet GB 2 013 344.

Le dispositif décrit dans ce document antérieur fait l'objet de deux modes de réalisation différents, dont le premier seulement permet l'émission d'ondes ultrasonores suivant une direction bien contrôlée mais impose d'être manipulé manuellement par un opérateur.

Un autre dispositif de ce type est par exemple décrit dans le document de brevet US 4,302,976. Ce dispositif comprend un nombre important de capteurs répartis circonférentiellement autour de l'axe longitudinal du dispositif, ce dernier étant confondu avec l'axe du tube à contrôler.

Le document de brevet US 4,055,990 décrit un dispositif pour la mesure de l'épaisseur d'une paroi d'un tube, comprenant un capteur avec des moyens d'émission et de réception fixés à un stator, et un rotor formant une enveloppe remplie d'un liquide de couplage, des moyens d'application d'une zone de contact du rotor sur la surface du paroi, un chariot embarquant le capteur pour translation dans le tube, ce chariot étant doté de moyens de guidage pour faire coïncider un axe longitudinal du chariot avec l'axe longitudinal du tube, et les moyens d'application comprenant des moyens excentriques portés par les moyens de guidage, conçus pour entraîner le capteur autour de l'axe longitudinal du chariot.

Dans ce contexte, la présente invention a principalement pour but de proposer un dispositif de contrôle non destructif qui, à la fois, puisse être mis en œuvre de façon automatique et soit suffisamment précis pour permettre une évaluation des dimensions des anomalies d'épaisseur observées de la paroi.

A cette fin, le dispositif de l'invention, par ailleurs conforme à la définition générique qu'en donne le préambule ci-dessus, est essentiellement caractérisé en ce que ledit capteur comprend une enveloppe rigide définissant, de façon étanche, un volume interne libre, et en ce que les moyens de couplage comprennent un organe de couplage solide appartenant à l'enveloppe, et un liquide de couplage disposé dans le volume interne libre et dans lequel baignent les moyens d'émission et de réception.

Grâce à cet agencement, la paroi peut être auscultée "à sec", c'est-à-dire sans qu'il soit nécessaire de prévoir un liquide ou un gel de couplage entre le capteur et la paroi.

Le dispositif de l'invention est défini dans la revendication 1.

Un mode de réalisation avantageux de l'invention peut être obtenu en prévoyant que le capteur comprenne un stator et un rotor formant ladite enveloppe, que le rotor soit monté rotatif, par rapport au stator, autour d'un axe de rotation perpendiculaire à un plan contenant chaque direction dudit ensemble, que le rotor et le stator définissent entre eux, de façon étanche, ledit volume interne libre, que les moyens d'émission et de réception soient disposés dans le volume interne et fixés au stator, et que l'organe de couplage solide comprenne un anneau de couplage, cet anneau de couplage appartenant au rotor, étant coaxial à l'axe de rotation, et présentant ledit plan en tant que plan transversal, et le liquide de couplage contribuant avec les moyens d'émission et de réception à remplir totalement le volume interne, les ondes ultrasonores se propageant suivant ladite première direction traversant ainsi une première zone active de la périphérie de l'anneau qui dépend de la position angulaire relative du rotor et du stator, mais qui est fixe par rapport au stator.

Dans un mode de réalisation possible de l'invention, il est par exemple prévu que le stator comprenne essentiellement un arbre allongé suivant l'axe de rotation, que le rotor comprenne, outre l'anneau de couplage, deux joues enfilées sur l'arbre de part et d'autre de l'anneau de couplage, et que le capteur comprenne en outre des moyens de serrage appuyant les joues de façon étanche contre l'anneau, deux roulements dont chacun est interposé entre l'arbre et l'une des joues, et des joints assurant l'étanchéité entre l'arbre et les joues.

Les moyens d'émission et de réception, qui comprennent par exemple un ou plusieurs éléments piézoélectriques, peuvent aussi comprendre un réflecteur.

Dans un mode de réalisation avantageux de l'invention, la première direction forme avec une direction radiale un angle de 28 degrés à plus ou moins 10 degrés.

Il est cependant également possible de prévoir que ledit ensemble comprenne en outre au moins une deuxième direction, que cette deuxième direction forme avec une direction radiale un angle de valeur nulle à plus ou moins 10 degrés, et que les ondes ultrasonores se propageant suivant la deuxième direction traversent une deuxième zone active de la périphérie de l'anneau qui est éventuellement confondue avec la première zone active, qui dépend de la position angulaire relative du rotor et du stator, mais qui est fixe par rapport au stator.

Le dispositif de l'invention peut aussi avantageusement comprendre des moyens d'application conçus pour appliquer avec une force élastique non nulle une zone de contact périphérique de l'anneau sur la surface de la paroi, pour déplacer, tout en l'appliquant, la zone de contact de l'anneau sur la surface de la paroi, et pour faire coïncider en permanence chaque zone active de l'anneau avec une partie au moins de la zone de contact.

Dans le cas où le dispositif de l'invention est spécifiquement conçu pour détecter d'éventuelles anomalies d'épaisseur de la paroi d'un tube présentant un axe longitudinal, il est judicieux de prévoir que ce dispositif comprenne un chariot sélectivement mobile en translation dans le tube et sur lequel est embarqué le capteur, ce chariot étant doté de moyens de guidage, desdits moyens d'application, et de moyens moteurs, les moyens de guidage soient conçus pour faire coïncider un axe longitudinal du chariot avec l'axe longitudinal du tube, et que les moyens d'application comprennent essentiellement des moyens excentriques portés par les moyens de guidage, portant le capteur, mobiles en rotation par rapport aux moyens de guidage autour de l'axe longitudinal du chariot, et conçus pour entraîner le capteur en rotation autour de l'axe longitudinal du chariot en appliquant la zone de contact de l'anneau sur la surface interne de la paroi du tube, les moyens moteurs étant conçus pour entraîner les moyens excentriques en rotation par rapport aux moyens de guidage.

L'invention concerne également un procédé de contrôle non destructif conçu pour détecter d'éventuelles anomalies d'épaisseur de la paroi d'un tube cylindrique présentant un axe longitudinal, ce procédé comprenant une étape de sondage consistant à contrôler l'épaisseur de la paroi du tube au moyen d'un capteur émettant et recevant des ondes ultrasonores, et étant caractérisé en ce que l'étape de sondage est mise en œuvre au moyen des opérations consistant au moins à appuyer le capteur sur la surface interne du tube, à déplacer le capteur, tout en l'appuyant, suivant un trajet à la fois tangentiel et longitudinal sur la surface interne du tube, par exemple suivant un trajet hélicoïdal, à enregistrer les ondes ultrasonores reçues par le capteur après réflexion et / ou diffraction par la paroi interne du tube, et à analyser les ondes ultrasonores reçues.

Le procédé de l'invention est défini dans la revendication 6.

Certaines au moins des ondes ultrasonores émises par le capteur sont de préférence orientées de manière à se propager dans la paroi du tube suivant une direction formant avec une direction radiale du tube un angle compris entre 30 degrés et 60 degrés.

Certaines au moins des ondes ultrasonores émises par le capteur peuvent aussi être orientées de manière à se propager dans la paroi du tube suivant une direction formant avec une direction radiale du tube un angle compris entre -15 degrés et +15 degrés.

De façon avantageuse, les ondes ultrasonores émises par le capteur suivant l'une quelconque des directions précitées sont des ondes longitudinales.

L'opération consistant à analyser les ondes ultrasonores reçues par le capteur comprend de préférence des opérations consistant à identifier deux échos provenant d'un même défaut de type rayure ou fissure, à mesurer une différence de temps de réception de ces deux échos, et à évaluer la hauteur du défaut comme une fonction au moins de l'épaisseur nominale de la paroi du tube, de la vitesse des ondes ultrasonores dans la paroi du tube, et de la différence de temps de réception des deux échos.

Le procédé de contrôle de l'invention est particulièrement avantageux dans le cas où le tube est une canalisation de fluide, et notamment de gaz.

Ce procédé est notamment applicable au cas où le tube est réalisé en polychlorure de vinyle, en polyamide, ou dans une polyoléfine, telle que le polyéthylène ou le polypropylène.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue axiale schématique en coupe d'un capteur appartenant à un dispositif conforme à l'invention;
- la figure 2 est une vue en perspective, à plus petite échelle, du capteur illustré à la figure 1;
- la figure 3 est une vue schématique en coupe d'un traducteur utilisable dans un capteur tel qu'illustré à la figure 1;
- la figure 4 est une vue en perspective d'un dispositif conforme à l'invention, inséré dans un tube représenté en perspective écorchée;
- la figure 5 est une vue en coupe agrandie d'une paroi supposée plane par souci de simplicité et présentant une fissure et un défaut de compacité, cette figure illustrant en outre de façon schématique les deux échos renvoyés par ces endommagements types;
- la figure 6 est une vue schématique en coupe d'un capteur conforme à l'invention, représenté dans un tube, et émettant dans la paroi de ce tube des ondes ultrasonores sensiblement non radiales; et
- la figure 7 est une vue schématique en coupe d'un capteur conforme à l'invention, représenté dans un tube, et émettant dans la paroi de ce tube des ondes ultrasonores sensiblement radiales.

Les principaux éléments illustrés sur ces figures et invoqués dans la présente description sont repérés par des références entre parenthèses ou non, les références entre parenthèses étant affectées aux ensembles auxquels appartiennent les éléments repérés par des références sans parenthèses.

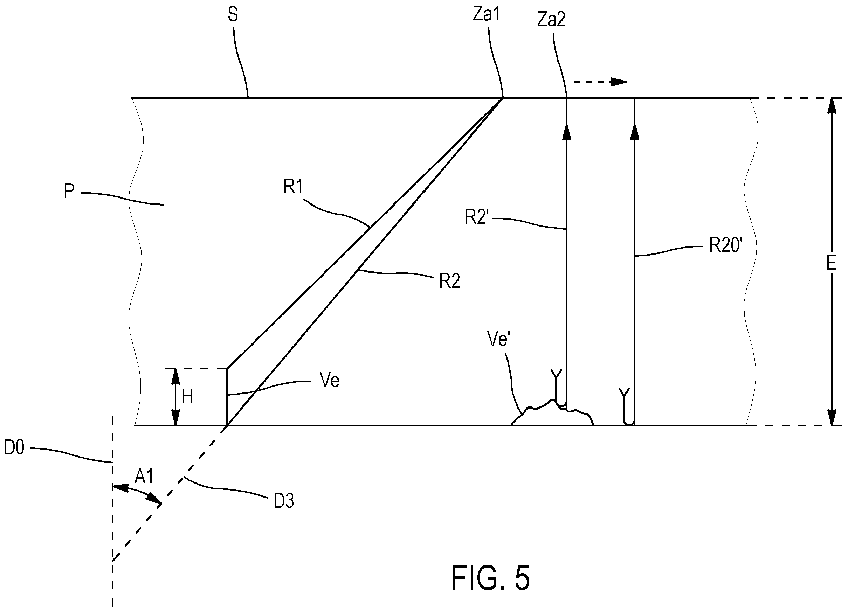

Comme annoncé précédemment, l'invention concerne un dispositif de contrôle non destructif conçu pour détecter d'éventuels défauts Ve (figure 5) dont chacun prend la forme d'une variation franche et locale de l'épaisseur E d'une paroi P, et se présente donc comme une fissure ou une rayure plus ou moins large.

En particulier, l'invention concerne un dispositif de contrôle non destructif conçu pour détecter d'éventuels défauts affectant la paroi P de tubes cylindriques T, qui peuvent être des canalisations de fluide, et notamment de gaz et / ou qui peuvent être réalisés en polychlorure de vinyle, en polyamide, ou dans une polyoléfine, telle que le polyéthylène ou le polypropylène.

Ce dispositif comprend notamment un capteur 1 et des moyens de couplage 2.

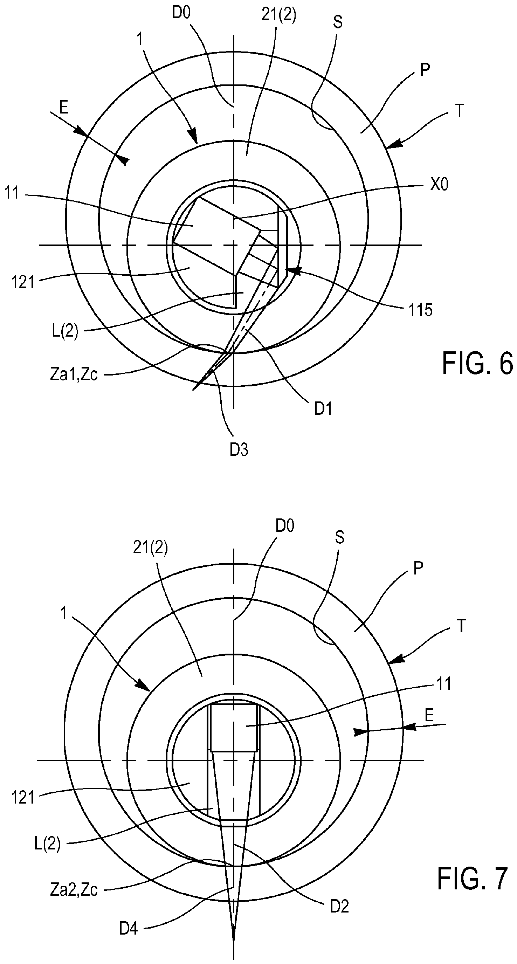

Le capteur 1 comprend lui-même des moyens d'émission et de réception 11 conçus pour émettre et recevoir des ondes ultrasonores suivant une ou plusieurs directions et notamment suivant une première direction D1 (figure 6).

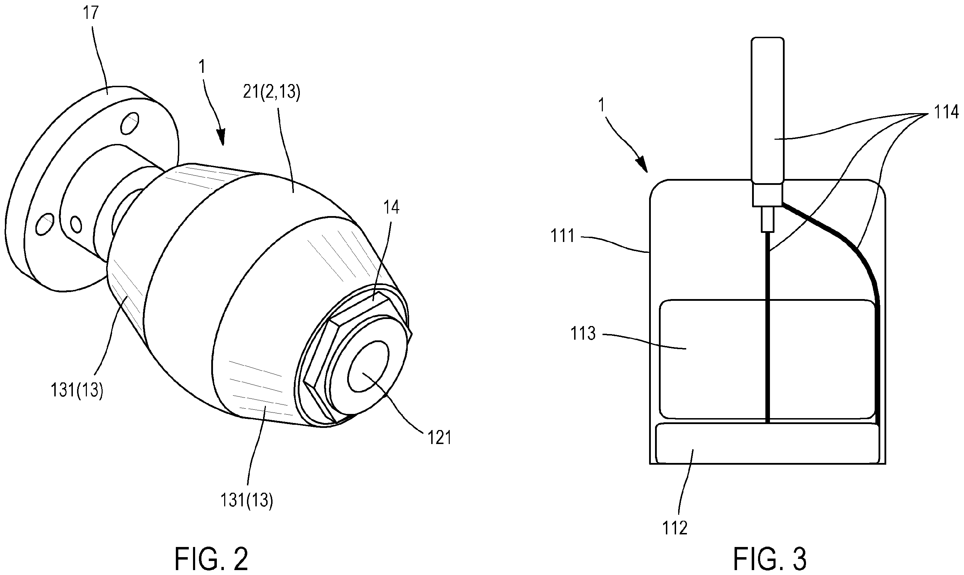

Les moyens d'émission et de réception 11, qui sont suffisamment bien connus de l'homme du métier pour ne pas requérir de description détaillée, comprennent par exemple (figure 3) un boîtier 111, un ou plusieurs éléments piézoélectriques 112 logés dans le boîtier, un absorbant acoustique 113 également logé dans le boîtier, et un câble électrique 114 permettant d'envoyer un signal électrique d'excitation à chaque élément piézoélectrique 112 agissant en tant qu'émetteur d'ondes ultrasonores, et / ou de recueillir de chaque élément piézoélectrique 112 agissant en tant que récepteur d'ondes ultrasonores un signal électrique représentatif des ondes acoustiques reçues par cet élément.

Les moyens de couplage 2 sont quant à eux conçus pour transmettre, en fonctionnement, les ondes ultrasonores à la surface S de la paroi P du tube T à contrôler.

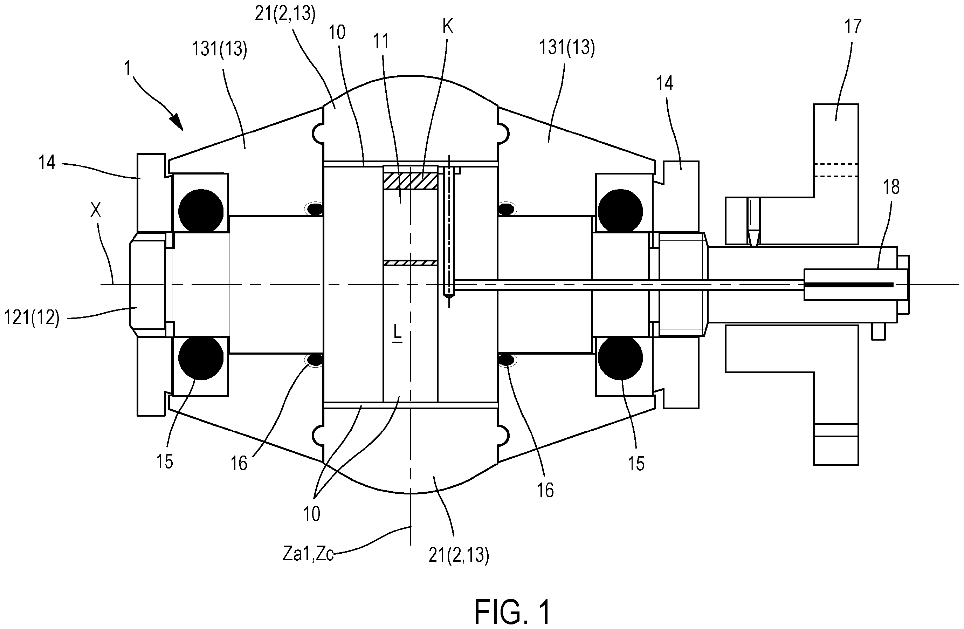

Le capteur 1 de l'invention comprend un stator 12 et un rotor 13 (figure 1), ce rotor 13 étant monté rotatif, par rapport au stator 12, autour d'un axe de rotation X.

La ou les directions d'émission des ondes ultrasonores émises par les moyens 11 s'inscrit ou s'inscrivent dans un plan qui est à la fois perpendiculaire au plan de la figure 1 et perpendiculaire à l'axe de rotation X du rotor 13 par rapport au stator 12.

Le rotor 13 et le stator 12, qui constituent ensemble une enveloppe rigide, définissent entre eux, de façon étanche, un volume interne libre 10 à l'intérieur duquel sont disposés les moyens d'émission et de réception 11.

Ces moyens d'émission et de réception 11 sont par ailleurs fixés au stator 12, par exemple au moyen d'un plot de colle K.

A l'intérieur du volume interne 10, les moyens d'émission et de réception 11 baignent dans un liquide de couplage L qui appartient aux moyens de couplage 2, qui est par exemple constitué d'éthylène-glycol dilué, et qui contribue, avec les moyens d'émission et de réception 11, à remplir totalement le volume interne 10.

Outre le liquide de couplage L, les moyens de couplage 2 comprennent un anneau de couplage 21, qui appartient également au rotor 13.

Cet anneau 21 est coaxial à l'axe de rotation X et présente, en tant que plan transversal et en l'occurrence aussi en tant que plan médian, le plan précité qui est perpendiculaire à la fois au plan de la figure 1 et à l'axe de rotation X.

Ainsi, quelle que soit leur direction, les ondes ultrasonores qui sont émises par les moyens 11 et qui se propagent suivant cette direction traversent une zone, dite "active", de la périphérie de l'anneau 21 qui dépend de la position angulaire relative du rotor 13 et du stator 12, mais qui est fixe par rapport au stator 12.

Dans le cas où les ondes ultrasonores sont émises par les moyens 11 suivant la direction D1 illustrée à la figure 6, la zone active de la périphérie de l'anneau est notée Za1, et dans le cas où les ondes ultrasonores sont émises par les moyens 11 suivant la direction D2 illustrée à la figure 7, la zone active de la périphérie de l'anneau est notée Za2.

Le stator 12 comprend essentiellement un arbre épaulé 121, de forme allongée suivant l'axe de rotation X, et partiellement évidé suivant une direction transversale (voir figure 1) pour pouvoir accueillir les moyens d'émission et de réception 11.

Le rotor 13 comprend, outre l'anneau de couplage 21, deux joues 131 enfilées sur l'arbre 121 de part et d'autre de cet anneau de couplage 21.

Le capteur 1 comprend par ailleurs des moyens de serrage 14, deux roulements 15, et des joints 16.

Les moyens de serrage 14, qui sont par exemple constitués par deux écrous fixés sur des parties filetées correspondantes de l'arbre 121, ont pour fonction d'appuyer les joues 131 de façon étanche contre l'anneau 21 suivant la direction de l'axe X.

Les deux roulements 15, dont chacun est interposé entre l'arbre 121 et l'une des joues 131, ont pour fonction de permettre une libre rotation du rotor 13 par rapport au stator 12.

Enfin, les joints 16, qui sont par exemple constitués par des joints toriques disposés entre l'arbre 121 et les deux joues respectives 131, ont pour fonction d'assurer l'étanchéité entre cet arbre 121 et ces joues 131, et donc notamment d'assurer le confinement du liquide de couplage L dans le volume interne 10.

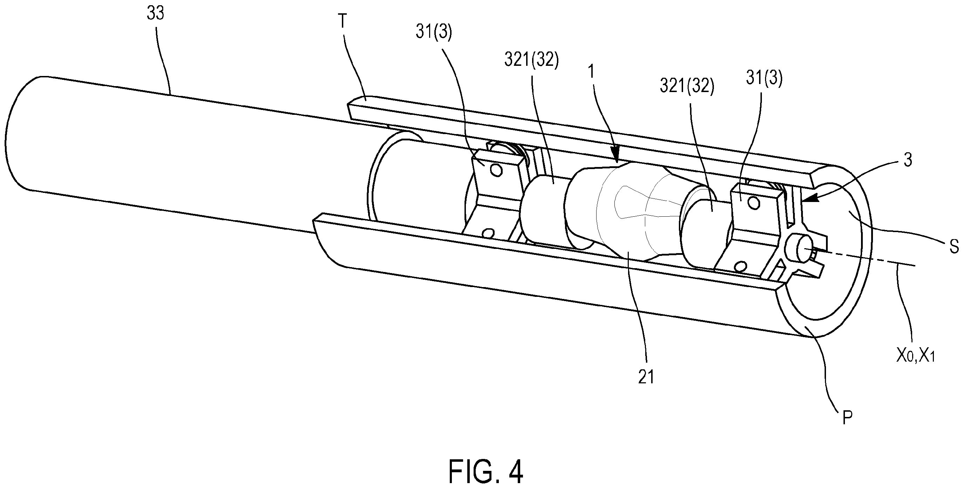

Comme le montre la figure 4, le dispositif de contrôle de l'invention comprend un chariot 3, sur lequel est embarqué le capteur 1, et qui est conçu pour être inséré dans le tube T à contrôler et pour pouvoir s'y déplacer en translation.

Ce chariot 3 comprend notamment des moyens de guidage 31, des moyens d'application 32, et des moyens moteurs 33.

Les moyens de guidage 31 sont conçus pour faire coïncider l'axe longitudinal X1 du chariot 3 avec l'axe longitudinal X0 du tube T.

Ces moyens de guidage 31 comprennent par exemple, comme illustré sur la figure 4, deux trains de roulement espacés l'un de l'autre et comprenant chacun trois chapes disposées à 120 degrés les unes des autres, chaque chape portant une roue appliquée élastiquement sur la surface interne S du tube T et susceptible de rouler sans glissement sur cette surface interne T.

Les moyens d'application 32 ont plusieurs fonctions.

Plus précisément, ces moyens d'application 32 sont conçus d'une part pour appliquer, avec une force élastique non nulle, une zone de contact périphérique Zc de l'anneau 21 du capteur 1 sur la surface S de la paroi P du tube T, d'autre part pour déplacer, tout en l'appliquant, la zone de contact Zc de l'anneau 21 sur la surface S de cette paroi P en faisant rouler cet anneau sur cette surface, et enfin pour faire coïncider en permanence chaque zone active, telle que Za1 ou Za2, de l'anneau 21 de couplage avec une partie au moins de la zone de contact Zc.

Comme illustré sur la figure 4, les moyens d'application 32 comprennent deux excentriques 321 dont chacun est monté tourillonnant et fixe en translation axiale par rapport à l'un des trains de roulement 31.

Les deux excentriques 321 sont fixés, de part et d'autre du capteur 1, aux extrémités correspondantes du stator 12 de ce capteur 1, par exemple au moyen de deux flasques correspondants, tels que le flasque 17 illustré à la figure 1 d'un seul côté du capteur par souci de simplicité.

Chaque flasque 17 est fixe en rotation par rapport à l'arbre 121 du capteur 1, de sorte que les deux excentriques 321 sont alignés l'un avec l'autre mais excentrés par rapport à l'axe X1 du chariot 3, autour duquel ces excentriques sont montés ensemble à rotation.

Les moyens moteurs 33, qui comprennent par exemple un moteur pas-à-pas, sont quant à eux conçus pour appliquer aux excentriques 321 un mouvement contrôlé de rotation par rapport aux trains de roulement 31, autour de l'axe longitudinal X1 du chariot 3.

Par ailleurs, chaque flasque 17 peut être doté d'un dispositif (non représenté) conçu pour fournir en permanence une donnée représentative de la position angulaire de la zone de contact Zc de l'anneau 21 sur la paroi P.

Grâce à cet agencement, les excentriques 321 entraînent donc, en fonctionnement, le capteur 1 en rotation autour de l'axe longitudinal X1 du chariot 3 en appliquant la zone de contact Zc de l'anneau de couplage 21 sur la surface interne S de la paroi P du tube T.

Les moyens moteurs 33 peuvent aussi avoir pour fonction d'entraîner les roues des trains de roulement 31.

En variante, le chariot 3 peut être translaté dans le tube T au moyen d'un jonc dans lequel peut éventuellement être logé le câble électrique 114.

Dans l'un et l'autre de ces deux cas, le capteur 1 est, en fonctionnement, déplacé sur la surface interne S du tube T suivant un trajet hélicoïdal et donc suivant un trajet à la fois tangentiel et longitudinal, par roulement de l'anneau 21 de couplage sur la surface S de cette paroi P, la zone de contact Zc de cet anneau 21 étant par ailleurs appliquée avec une force élastique non nulle sur cette surface S.

Pendant que s'effectue ce mouvement, les moyens d'émission et de réception 11 émettent des ondes ultrasonores qui transitent par l'une au moins des zones actives Za1 et Za2 de la périphérie de l'anneau de couplage 21.

Les ondes ultrasonores qui résultent de la réflexion et / ou de la diffraction des ondes incidentes par la paroi interne S du tube T et qui sont reçues en retour par le capteur 1 sont, après conversion sous forme de signaux électriques par les moyens 11 et transmission sur le câble 114, enregistrées à l'extérieur du tube par un appareil approprié, puis analysées.

Dans le cas où les signaux électriques produits par les moyens 11 en réponse aux ondes ultrasonores reçues en retour sont transmis par voie filaire, ces signaux transitent par exemple par un connecteur 18 prévu sur l'arbre 121 (figure 1) et par un connecteur tournant (non visible) intégré à l'excentrique 321.

En variante, ces signaux électriques peuvent être transmis par liaison radio.

Comme d'une part les zones actives Za1 et Za2 de la périphérie de l'anneau de couplage 21 sont fixes en rotation autour de l'axe X par rapport aux moyens d'émission et de réception 11, donc aussi par rapport à l'arbre 121 auquel ces moyens 11 sont fixés, comme d'autre part les flasques 17 sont fixes en rotation autour de l'axe X par rapport à l'arbre 121, et comme enfin les excentriques 321 sont fixes en rotation autour de l'axe X par rapport aux flasques 17, il suffit d'indexer de façon appropriée les flasques 17 par rapport à l'arbre 121 pour que l'une au moins des zones actives Za1 et Za2 de la périphérie de l'anneau de couplage 21 s'inscrive dans la zone de contact Zc de cet anneau 21 avec la surface S de la paroi P du tube T.

En pratique, il est possible de superposer les zones actives Za1 et Za2, par exemple en utilisant un émetteur-récepteur piézoélectrique multi-éléments permettant d'émettre des ondes acoustiques suivant une direction réglable.

Il est également possible d'utiliser une paire de capteurs 1 dont le premier comprend des moyens 11 pour émettre et recevoir des ondes ultrasonores suivant la direction D1 (figure 6) et dont le deuxième comprend des moyens 11 pour émettre et recevoir des ondes ultrasonores suivant la direction D2 (figure 7), de faire coïncider la zone active Za1 de l'anneau 21 du premier capteur avec la zone de contact Zc de cet anneau, et de faire coïncider la zone active Za2 de l'anneau 21 du deuxième capteur avec la zone de contact Zc de cet anneau.

Il est encore possible d'accoler, dans un même capteur 1, des moyens 11 pour émettre et recevoir des ondes ultrasonores suivant la direction D1 et des moyens 11 pour émettre et recevoir des ondes ultrasonores suivant la direction D2, l'anneau 21 de ce capteur présentant alors deux zones de contact Zc également accolées l'une à l'autre.

Comme le montre la figure 6, il peut être judicieux, pour réduire l'encombrement du capteur 1, de doter les moyens d'émission et de réception 11 d'un réflecteur acoustique 115 dans le cas où les ondes ultrasonores émises et reçues par ces moyens 11 progressent suivant une direction D1 qui s'écarte sensiblement de la direction radiale D0.

Les ondes ultrasonores utilisées sont de préférence des ondes longitudinales, se situant dans une gamme de fréquence comprise entre 2 Mhz et 15 Mhz, et de préférence autour de 5 Mhz.

Comme le montrent les figures 6 et 7, les ondes ultrasonores émises peuvent être focalisées de manière à converger en un point situé au-delà de la surface externe de la paroi P du tube T, le dispositif de l'invention étant utilisable pour tous les tubes d'une gamme de tubes présentant des épaisseurs E de parois différentes.

Il est également judicieux de prévoir (figure 6) que la direction D1, qui est la direction privilégiée d'émission des ondes ultrasonores, forme avec la direction radiale D0 un angle de 28 degrés à plus ou moins 10 degrés près, c'est-à-dire un angle compris entre 18 et 38 degrés.

Dans ces conditions, ces ondes ultrasonores se propagent dans la paroi P du tube T suivant une direction D3 formant avec la direction radiale D0 du tube T un angle A1 compris entre 30 degrés et 60 degrés et de préférence égal à 45 degrés.

Dans le cas où des ondes ultrasonores sont également émises suivant une autre direction D2 (figure 7), cette autre direction D2 peut former, avec la direction radiale D0, un angle de valeur nulle à plus ou moins 10 degrés, c'est-à-dire un angle compris entre -10 degrés et +10 degrés.

Dans ces conditions, ces ondes ultrasonores se propagent dans la paroi P du tube T suivant une direction D4 formant elle-même, avec la direction radiale D0 du tube T, un angle compris entre -15 degrés et +15 degrés.

La figure 5 illustre de façon schématique les modalités d'analyse des ondes ultrasonores reçues par le capteur 1 dans le cas où ces ondes rencontrent un défaut Ve illustré à gauche et constitué typiquement par une rayure ou une fissure sur la surface externe de la paroi P du tube T, et des ondes ultrasonores reçues par le capteur 1 dans le cas où ces ondes rencontrent un défaut Ve' illustré à droite et constitué typiquement par un défaut de compacité.

Bien que, pour des raisons de simplicité, cette paroi soit illustrée comme plane sur la figure 5, et bien que le dispositif de l'invention soit utilisable sur des parois planes, l'homme du métier comprendra que la représentation schématique de la figure 5 est applicable à une paroi cylindrique.

Comme le montre cette figure, les ondes ultrasonores qui sont émises par la zone active Za1 et qui rencontrent un défaut Ve de type fissure ou rayure produisent deux échos R1 et R2, qui sont captés l'un après l'autre dans cet ordre par la zone active Za1.

Le premier écho R1, de plus faible amplitude, provient de la diffraction des ondes ultrasonores par le sommet du défaut Ve.

Le deuxième écho R2, de plus forte amplitude, est dû à un effet de coin par lequel les ondes ultrasonores sont réfléchies par la base du défaut Ve.

La différence des temps de réception respectifs de ces deux échos R1 et R2 dans la zone active Za1 est liée, par des lois connues de l'homme du métier, à l'angle A1, à la hauteur H du défaut, à l'épaisseur nominale E de la paroi P, et à la vitesse de propagation des ondes ultrasonores dans cette paroi.

Dans la mesure où la vitesse de propagation des ondes ultrasonores dans une paroi saine peut être aisément déterminée par une expérience et un étalonnage préliminaires, et où la différence de temps de réception des échos R1 et R2 est mesurée, la hauteur H du défaut Ve peut donc être déterminée sur la base des autres précités, qui sont tous connus.

Comme le montre par ailleurs la figure 5 sur sa droite, les ondes ultrasonores qui sont émises par la zone active Za2 et qui rencontrent un défaut Ve' du type défaut de compacité produisent un écho R2', qui est capté par la zone active Za2 de façon plus précoce que l'écho R2'0 illustré plus à droite et renvoyé par une paroi dépourvue d'anomalie.

Dans la mesure où la différence des temps de réception respectifs de ces deux échos R2' et R2'0 dans la zone active Za2 est liée à la hauteur du défaut et à la vitesse de propagation des ondes ultrasonores dans la paroi P, la hauteur du défaut peut également être déterminée à partir de cette différence des temps de réception.

## Revendications

1. Dispositif de contrôle non destructif conçu pour détecter d'éventuelles anomalies (Ve) d'épaisseur d'une paroi (P), ce dispositif incluant au moins un capteur (1) comprenant des moyens d'émission et de réception (11) conçus pour émettre et recevoir des ondes ultrasonores suivant au moins une première direction (D1), et des moyens de couplage (2) propres à transmettre en fonctionnement lesdites ondes ultrasonores à une surface (S) de la paroi (P) à contrôler, ledit capteur (1) comprenant une enveloppe rigide (12, 13) définissant, de façon étanche, un volume interne libre (10), les moyens de couplage (2) comprenant un organe de couplage solide (21) appartenant à l'enveloppe, et un liquide de couplage (L) disposé dans le volume interne libre (10) et dans lequel baignent les moyens d'émission et de réception (11), le capteur (1) comprenant un stator (12) et un rotor (13) formant ladite enveloppe, le rotor (13) étant monté rotatif, par rapport au stator (12), autour d'un axe de rotation (X) perpendiculaire à un plan transversal, le rotor (13) et le stator (12) définissant entre eux, de façon étanche, ledit volume interne libre (10), les moyens d'émission et de réception (11) étant disposés dans le volume interne (10) et fixés au stator (12), l'organe de couplage solide comprenant un anneau de couplage (21), cet anneau de couplage (21) appartenant au rotor (13), étant coaxial à l'axe de rotation (X), et le liquide de couplage (L) contribuant avec les moyens d'émission et de réception (11) à remplir totalement le volume interne (10), les ondes ultrasonores se propageant suivant ladite première direction (D1) traversant ainsi une première zone active (Za1) de la périphérie de l'anneau (21) qui dépend de la position angulaire relative du rotor (13) et du stator (12), mais qui est fixe par rapport au stator (12), ce dispositif comprenant en outre des moyens d'application (32) conçus pour appliquer avec une force élastique non nulle une zone de contact périphérique (Zc) de l'anneau (21) sur la surface (S) de la paroi (P), pour déplacer, tout en l'appliquant, la zone de contact (Zc) de l'anneau (21) sur la surface (S) de la paroi (P), et pour faire coïncider en permanence la zone active (Za1) de l'anneau (21) avec une partie au moins de la zone de contact (Zc), ce dispositif, qui est conçu pour détecter d'éventuelles anomalies (Ve) d'épaisseur de la paroi (P) d'un tube (T) présentant un axe longitudinal (X0), comprenant en outre un chariot (3) sélectivement mobile en translation dans le tube (T) et sur lequel est embarqué le capteur (1), ce chariot (3) étant doté de moyens de guidage (31), desdits moyens d'application (32), et de moyens moteurs (33), les moyens de guidage (31) étant conçus pour faire coïncider un axe longitudinal (X1) du chariot (3) avec l'axe longitudinal (X0) du tube (T), les moyens d'application (32) comprenant des moyens excentriques (321) portés par les moyens de guidage (31) de sorte qu'ils sont excentrés par rapport à l'axe (X1) du chariot (3), portant le capteur en étant fixés, de part et d'autre du capteur, aux extrémités correspondantes du stator (12), mobiles en rotation par rapport aux moyens de guidage (31) autour de l'axe longitudinal (X1) du chariot (3), et conçus pour entraîner le capteur (1) en rotation autour de l'axe longitudinal (X1) du chariot (3) en appliquant la zone de contact (Zc) de l'anneau (21) sur la surface interne (S) de la paroi (P) du tube (T), et les moyens moteurs (33) étant conçus pour entraîner les moyens excentriques (321) en rotation par rapport aux moyens de guidage (31).

2. Dispositif de contrôle non destructif suivant la revendication 1, **caractérisé en ce que** le stator (12) comprend essentiellement un arbre (121) allongé suivant l'axe de rotation (X), **en ce que** le rotor (13) comprend, outre l'anneau de couplage (21), deux joues (131) enfilées sur l'arbre (121) de part et d'autre de l'anneau de couplage (21), et **en ce que** le capteur (1) comprend en outre des moyens de serrage (14) appuyant les joues (131) de façon étanche contre l'anneau (21), deux roulements (15) dont chacun est interposé entre l'arbre (121) et l'une des joues (131), et des joints (16) assurant l'étanchéité entre l'arbre (121) et les joues (131).

3. Dispositif de contrôle non destructif suivant l'une quelconque des revendications précédentes, **caractérisé en ce que** les moyens d'émission et de réception (11) comprennent un réflecteur (115).

4. Dispositif de contrôle non destructif suivant l'une quelconque des revendications précédentes, **caractérisé en ce que** ladite première direction (D1) forme avec une direction radiale (D0) du tube (T) un angle de 28 degrés à plus ou moins 10 degrés.

5. Dispositif de contrôle non destructif suivant l'une quelconque des revendications précédentes, **caractérisé en ce qu'**il comprend des moyens d'émission et de réception conçus pour émettre et recevoir des ondes ultrasonores suivant au moins une deuxième direction (D2), **en ce que** cette deuxième direction (D2) forme avec une direction radiale (D0) du tube (T) un angle de valeur nulle à plus ou moins 10 degrés, et **en ce que** les ondes ultrasonores se propageant suivant la deuxième direction (D2) traversent une deuxième zone active (Za2) de la périphérie de l'anneau (21) qui est éventuellement confondue avec la première zone active (Za1), qui dépend de la position angulaire relative du rotor (13) et du stator (12), mais qui est fixe par rapport au stator (12) .

6. Procédé de contrôle non destructif conçu pour détecter d'éventuelles anomalies (Ve) d'épaisseur de la paroi (P) d'un tube cylindrique (T) présentant un axe longitudinal (X0), le procédé étant mis en œuvre au moyen d'un dispositif suivant l'une quelconque des revendications 1 à 5, ce procédé comprenant une étape de sondage consistant à contrôler l'épaisseur de la paroi (P) du tube (T) au moyen d'un capteur (1) émettant et recevant des ondes ultrasonores, l'étape de sondage étant mise en œuvre au moyen des opérations consistant au moins à appuyer le capteur (1) sur la surface interne (S) du tube (T), à déplacer le capteur (1), tout en l'appuyant, suivant un trajet à la fois tangentiel et longitudinal sur la surface interne du tube, à enregistrer les ondes ultrasonores reçues par le capteur (1) après réflexion et / ou diffraction par la paroi interne du tube, et à analyser les ondes ultrasonores reçues, et l'opération consistant à analyser les ondes ultrasonores reçues par le capteur (1) comprenant des opérations consistant à identifier deux échos (R1; R2) provenant d'un même défaut (Ve) de type rayure ou fissure, à mesurer une différence de temps de réception de ces deux échos (R1, R2), et à évaluer la hauteur (H) du défaut (Ve) comme une fonction au moins de l'épaisseur nominale (E) de la paroi (P) du tube (T), de la vitesse des ondes ultrasonores dans la paroi (P) du tube (T), et de la différence de temps de réception des deux échos (R1, R2).

7. Procédé de contrôle non destructif suivant la revendication 6, **caractérisé en ce que** certaines au moins des ondes ultrasonores émises par le capteur (1) se propagent dans la paroi (P) du tube (T) suivant une direction (D3) formant avec une direction radiale (D0) du tube (T) un angle (A1) compris entre 30 degrés et 60 degrés.

8. Procédé de contrôle non destructif suivant l'une quelconque des revendications 6 et 7, **caractérisé en ce que** certaines au moins des ondes ultrasonores émises par le capteur (1) se propagent dans la paroi (P) du tube (T) suivant une direction (D4) formant avec une direction radiale (D0) du tube (T) un angle compris entre -15 degrés et +15 degrés.

9. Procédé de contrôle non destructif suivant l'une quelconque des revendications 6 à 8, **caractérisé en ce que** les ondes ultrasonores émises par le capteur (1) sont des ondes longitudinales.

10. Procédé de contrôle non destructif suivant l'une quelconque des revendications 6 à 9, **caractérisé en ce que** le tube (T) est une canalisation de fluide, et notamment de gaz.

11. Procédé de contrôle non destructif suivant l'une quelconque des revendications 6 à 10, **caractérisé en ce que** le tube (T) est réalisé en polychlorure de vinyle, en polyamide, ou dans une polyoléfine, telle que le polyéthylène ou le polypropylène.

## Patentansprüche

1. Vorrichtung zur zerstörungsfreien Prüfung, die dafür konzipiert ist, eventuelle Dickenanomalien (Ve) einer Wand (P) zu erkennen, wobei diese Vorrichtung mindestens einen Sensor (1) einschließt, der Sende- und Empfangsmittel (11) umfasst, die dafür konzipiert sind, Ultraschallwellen in mindestens einer ersten Richtung (D1) zu senden und zu empfangen, und Koppelmittel (2), die dazu geeignet sind, im Betrieb die Ultraschallwellen auf eine Fläche (S) der Wand (P) zu übertragen, die geprüft werden soll, wobei der Sensor (1) eine starre Hülle (12, 13) umfasst, die in dichter Weise ein freies Innenvolumen (10) definiert, wobei die Koppelmittel (2) ein solides Koppelorgan (21) umfassen, das zur Hülle gehört, und eine Koppelflüssigkeit (L), die im freien Innenvolumen (10) angeordnet ist und in der die Sende- und Empfangsmittel (11) baden, wobei der Sensor (1) einen Stator (12) und einen Rotor (13) umfasst, der die Hülle bildet, wobei der Rotor (13) in Bezug auf den Stator (12) um eine Drehachse (X) drehbar montiert ist, die zu einer Querebene senkrecht ist, wobei der Rotor (13) und der Stator (12) zwischen sich in dichter Weise das freie Innenvolumen (10) definieren, wobei die Sende- und Empfangsmittel (11) im Innenvolumen (10) angeordnet und am Stator (12) befestigt sind, wobei das solide Koppelorgan einen Koppelring (21) umfasst, wobei dieser Koppelring (21) zum Rotor (13) gehört, zur Drehachse (X) koaxial ist, und die Koppelflüssigkeit (L) mit den Sende- und Empfangsmittel (11) dazu beiträgt, das Innenvolumen (10) vollständig auszufüllen, wobei die Ultraschallwellen, die sich in der ersten Richtung (D1) ausbreiten, so durch eine erste aktive Zone (Za1) des Umfangs des Rings (21) hindurchgehen, die von der relativen Winkelstellung des Rotors (13) und des Stators (12) abhängt, aber die in Bezug auf den Stator (12) fest ist, wobei diese Vorrichtung weiter Anlegemittel (32) umfasst, die dafür konzipiert sind, eine Umfangskontaktzone (Zc) des Rings (21) mit einer elastischen Kraft von ungleich Null an die Fläche (S) der Wand (P) anzulegen, um, während dieselbe angelegt wird, die Kontaktzone (Zc) des Rings (21) an der Fläche (S) der Wand (P) zu bewegen, und um die aktive Zone (Za1) des Rings (21) permanent mit mindestens einem Teil der Kontaktzone (Zc) in Deckung zu bringen, wobei diese Vorrichtung, die dafür konzipiert ist, eventuelle Dickenanomalien (Ve) der Wand (P) eines Rohres (T), das eine Längsachse (X0) aufweist, zu erkennen, weiter einen Schlitten (3) umfasst, der selektiv im Rohr (T) translationsbeweglich ist und auf dem der Sensor (1) eingebaut ist, wobei dieser Schlitten (3) mit Führungsmitteln (31), den Anlegemitteln (32) und Antriebsmitteln (33) ausgestattet ist, wobei die Führungsmittel (31) dafür konzipiert sind, eine Längsachse (X1) des Schlittens (3) mit der Längsachse (X0) des Rohres (T) in Deckung zu bringen, wobei die Anlegemittel (32) exzentrische Mittel (321) umfassen, die von den Führungsmitteln (31) so getragen werden, dass sie in Bezug auf die Achse (X1) des Schlittens (3) exzentrisch sind, der den Sensor trägt, indem sie beidseits des Sensors an den entsprechenden Enden des Stators (12) in Bezug auf die Führungsmittel (31) um die Längsachse (X1) des Schlittens (3) drehbeweglich befestigt sind, und dafür konzipiert sind, den Sensor (1) um die Längsachse (X1) des Schlittens (3) drehend anzutreiben, indem sie die Kontaktzone (Zc) des Rings (21) an die Innenfläche (S) der Wand (P) des Rohres (T) anlegen, und wobei die Antriebsmittel (33) dafür konzipiert sind, die exzentrischen Mittel (321) in Bezug auf die Führungsmittel (31) drehend anzutreiben.

2. Zerstörungsfreie Prüfvorrichtung nach Anspruch 1, **dadurch gekennzeichnet, dass** der Stator (12) im Wesentlichen eine entlang der Drehachse (X) langgestreckte Welle (121) umfasst, dadurch, dass der Rotor (13) neben dem Koppelring (21) zwei Backen (131) umfasst, die beidseits des Koppelrings (21) auf die Welle (121) gesteckt sind, und dadurch, dass der Sensor (1) weiter Spannmittel (14), die die Backen (131) in dichter Weise gegen den Ring (21) drücken, zwei Wälzlager (15), von denen jedes zwischen der Welle (121) und einer der Backen (131) eingefügt ist, und Dichtungen (16) umfasst, die die Dichtigkeit zwischen der Welle (121) und den Backen (131) sicherstellen.

3. Zerstörungsfreie Prüfvorrichtung nach einem der vorstehenden Ansprüche, **dadurch gekennzeichnet, dass** die Sende- und Empfangsmittel (11) einen Reflektor (115) umfassen.

4. Zerstörungsfreie Prüfvorrichtung nach einem der vorstehenden Ansprüche, **dadurch gekennzeichnet, dass** die erste Richtung (D1) zu einer radialen Richtung (D0) des Rohres (T) einen Winkel von 28 Grad plus oder minus 10 Grad bildet.

5. Zerstörungsfreie Prüfvorrichtung nach einem der vorstehenden Ansprüche, **dadurch gekennzeichnet, dass** sie Sende- und Empfangsmittel umfasst, die dafür konzipiert sind, Ultraschallwellen in mindestens einer zweiten Richtung (D2) zu senden und zu empfangen, dadurch, dass diese zweite Richtung (D2) zu einer radialen Richtung (D0) des Rohres (T) einen Winkel mit einem Wert von Null plus oder minus 10 Grad bildet, und dadurch, dass die Ultraschallwellen, die sich in der zweiten Richtung (D2) ausbreiten, durch eine zweite aktive Zone (Za2) des Umfangs des Ringes (21) hindurchgehen, die eventuell mit der ersten aktiven Zone (Za1) zusammenfällt, die von der relativen Winkelstellung des Rotors (13) und des Stators (12) abhängt, aber die in Bezug auf den Stator (12) fest ist.

6. Verfahren zur zerstörungsfreien Prüfung, das dafür konzipiert ist, eventuelle Dickenanomalien (Ve) der Wand (P) eines zylinderförmigen Rohres (T) zu erkennen, das eine Längsachse (X0) aufweist, wobei das Verfahren mittels einer Vorrichtung nach einem der Ansprüche 1 bis 5 umgesetzt wird, wobei dieses Verfahren einen Sondierungsschritt umfasst, der darin besteht, die Dicke der Wand (P) des Rohres (T) mittels eines Sensors (1) zu prüfen, der Ultraschallwellen sendet und empfängt, wobei der Sondierungsschritt mittels der Vorgänge umgesetzt wird, die mindestens darin bestehen, den Sensor (1) an die Innenfläche (S) des Rohres (T) zu drücken, den Sensor (1), während er angedrückt wird, entlang einer Bahn zu bewegen, die gleichzeitig tangential und längs an der Innenfläche des Rohres verläuft, die vom Sensor (1) nach Reflexion und/oder Diffraktion durch die Innenwand des Rohres empfangenen Ultraschallwellen aufzuzeichnen, und die empfangenen Ultraschallwellen zu analysieren, und wobei der Vorgang, der darin besteht, die vom Sensor (1) empfangenen Ultraschallwellen zu analysieren, Vorgänge umfasst, die darin bestehen, zwei Echos (R1; R2) zu identifizieren, die von ein und demselben Fehler (Ve) vom Typ Riefe oder Riss herrühren, eine Empfangszeitdifferenz dieser zwei Echos (R1, R2) zu messen, und die Höhe (H) des Fehlers (Ve) als eine Funktion von mindestens der Nenndicke (E) der Wand (P) des Rohres (T), der Geschwindigkeit der Ultraschallwellen in der Wand (P) des Rohres (T), und der Empfangszeitdifferenz der zwei Echos (R1, R2) zu beurteilen.

7. Zerstörungsfreies Prüfverfahren nach Anspruch 6, **dadurch gekennzeichnet, dass** sich mindestens einige der vom Sensor (1) gesendeten Ultraschallwellen in der Wand (P) des Rohres (T) in einer Richtung (D3) ausbreiten, die zu einer radialen Richtung (D0) des Rohres (T) einen Winkel (A1) im Bereich zwischen 30 Grad und 60 Grad bildet.

8. Zerstörungsfreies Prüfverfahren nach einem der Ansprüche 6 und 7, **dadurch gekennzeichnet, dass** sich mindestens einige der vom Sensor (1) gesendeten Ultraschallwellen in der Wand (P) des Rohres (T) in einer Richtung (D4) ausbreiten, die zu einer radialen Richtung (D0) des Rohres (T) einen Winkel im Bereich zwischen - 15 Grad und +15 Grad bildet.

9. Zerstörungsfreies Prüfverfahren nach einem der Ansprüche 6 bis 8, **dadurch gekennzeichnet, dass** die vom Sensor (1) gesendeten Ultraschallwellen Längswellen sind.

10. Zerstörungsfreies Prüfverfahren nach einem der Ansprüche 6 bis 9, **dadurch gekennzeichnet, dass** das Rohr (T) eine Fluid-, und insbesondere Gasrohrleitung ist.

11. Zerstörungsfreies Prüfverfahren nach einem der Ansprüche 6 bis 10, **dadurch gekennzeichnet, dass** das Rohr (T) aus Polyvinylchlorid, aus Polyamid, oder aus einem Polyolefin, wie etwa Polyethylen oder Polypropylen, hergestellt ist.

## Claims

1. Device for non-destructive inspection designed to detect possible anomalies (Ve) in thickness of a wall (P), this device including at least one sensor (1) comprising emission and reception means (11) designed to emit and receive ultrasound waves according to at least one first direction (D1), and coupling means (2) suitable for transmitting during operation said ultrasound waves to a surface (S) of the wall (P) to be inspected, said sensor (1) comprising a rigid envelope (12, 13) defining, in a sealed manner, a free inner volume (10), the coupling means (2) comprising a solid coupling member (21) belonging to the envelope, and a coupling liquid (L) disposed in the free inner volume (10) and in which the emission and reception means (11) are immersed, the sensor (1) comprising a stator (12) and a rotor (13) forming said envelope, the rotor (13) being rotatably mounted, with respect to the stator (12), about an axis of rotation (X) perpendicular to a transverse plane, the rotor (13) and the stator (12) together defining, in a sealed manner, said free inner volume (10), the emission and reception means (11) being disposed in the inner volume (10) and fastened to the stator (12), the solid coupling member comprising a coupling ring (21), this coupling ring (21) belonging to the rotor (13), being coaxial to the axis of rotation (X), and the coupling liquid (L) contributing with the emission and reception means (11) to totally filling the inner volume (10), the ultrasound waves propagating according to said first direction (D1) thus passing through a first active zone (Za1) of the periphery of the ring (21) which depends on the relative angular position of the rotor (13) and of the stator (12), but which is stationary with respect to the stator (12), this device further comprising pressing means (32) designed to press, with a non-zero elastic force, a peripheral contact zone (Zc) of the ring (21) onto the surface (S) of the wall (P), in order to move, while pressing it, the contact zone (Zc) of the ring (21) on the surface (S) of the wall (P), and to make the active zone (Za1) of the ring (21) constantly coincide with at least a portion of the contact zone (Zc), this device, which is designed to detect possible anomalies (Ve) in thickness of the wall (P) of a tube (T) having a longitudinal axis (X0), further comprising a truck (3) selectively mobile in translation in the tube (T) and on which the sensor (1) is on board, this truck (3) being provided with guide means (31), said pressing means (32), and motor means (33), the guide means (31) being designed to make a longitudinal axis (X1) of the truck (3) coincide with the longitudinal axis (X0) of the tube (T), the pressing means (32) comprising off-centre means (321) carried by the guide means (31) in such a way that they are off centre with respect to the axis (X1) of the truck (3), carrying the sensor while being fastened, on either side of the sensor, to the corresponding ends of the stator (12), mobile in rotation with respect to the guide means (31) about the longitudinal axis (X1) of the truck (3), and designed to drive the sensor (1) in rotation about the longitudinal axis (X1) of the truck (3) while pressing the contact zone (Zc) of the ring (21) onto the inner surface (S) of the wall (P) of the tube (T), and the motor means (33) being designed to drive the off-centre means (321) in rotation with respect to the guide means (31).

2. Device for non-destructive inspection according to claim 1, **characterised in that** the stator (12) substantially comprises a shaft (121) elongated according to the axis of rotation (X), **in that** the rotor (13) comprises, besides the coupling ring (21), two flanges (131) threaded onto the shaft (121) on either side of the coupling ring (21), and **in that** the sensor (1) further comprises clamping means (14) pressing the flanges (131) in a sealed manner against the ring (21), two bearings (15), each of which is interposed between the shaft (121) and one of the flanges (131), and joints (16) ensuring the sealing between the shaft (121) and the flanges (131).

3. Device for non-destructive inspection according to any one of the previous claims, **characterised in that** the emission and reception means (11) comprise a reflector (115) .

4. Device for non-destructive inspection according to any one of the previous claims, **characterised in that** said first direction (D1) forms, with a radial direction (D0) of the tube (T), an angle of 28 degrees, plus or minus 10 degrees.

5. Device for non-destructive inspection according to any one of the previous claims, **characterised in that** it comprises emission and reception means designed to emit and receive ultrasound waves according to at least one second direction (D2), **in that** this second direction (D2) forms, with a radial direction (D0) of the tube (T), an angle having a value of zero, plus or minus 10 degrees, and **in that** the ultrasound waves propagating according to the second direction (D2) pass through a second active zone (Za2) of the periphery of the ring (21) which is optionally the same as the first active zone (Za1), which depends on the relative angular position of the rotor (13) and of the stator (12), but which is stationary with respect to the stator (12).

6. Method for non-destructive inspection designed to detect possible anomalies (Ve) in thickness of the wall (P) of a cylindrical tube (T) having a longitudinal axis (X0), the method being implemented by means of a device according to any one of claims 1 to 5, this method comprising a probing step involving inspecting the thickness of the wall (P) of the tube (T) by means of a sensor (1) emitting and receiving ultrasound waves, the probing step being implemented by means of the operations involving at least pressing the sensor (1) onto the inner surface (S) of the tube (T), moving the sensor (1), while pressing it, according to a trajectory that is both tangential and longitudinal on the inner surface of the tube, recording the ultrasound waves received by the sensor (1) after reflection and / or diffraction by the inner wall of the tube, and analysing the ultrasound waves received, and the operation involving analysing the ultrasound waves received by the sensor (1) comprising operations involving identifying two echoes (R1; R2) coming from the same defect (Ve) of the scratch or crack type, measuring a difference in time of reception of these two echoes (R1, R2), and evaluating the height (H) of the defect (Ve) as a function at least of the nominal thickness (E) of the wall (P) of the tube (T), of the speed of the ultrasound waves in the wall (P) of the tube (T) and of the difference in time of reception of the two echoes (R1, R2).

7. Method for non-destructive inspection according to claim 6, **characterised in that** at least some of the ultrasound waves emitted by the sensor (1) propagate in the wall (P) of the tube (T) according to a direction (D3) forming, with a radial direction (D0) of the tube (T), an angle (A1) of between 30 degrees and 60 degrees.

8. Method for non-destructive inspection according to any one of claims 6 and 7, **characterised in that** at least some of the ultrasound waves emitted by the sensor (1) propagate in the wall (P) of the tube (T) according to a direction (D4) forming, with a radial direction (D0) of the tube (T), an angle of between -15 degrees and +15 degrees.

9. Method for non-destructive inspection according to any one of claims 6 to 8, **characterised in that** the ultrasound waves emitted by the sensor (1) are longitudinal waves.

10. Method for non-destructive inspection according to any one of claims 6 to 9, **characterised in that** the tube (T) is a pipe for fluid, and in particular for gas.

11. Method for non-destructive inspection according to any one of claims 6 to 10, **characterised in that** the tube (T) is made from polyvinyl chloride, from polyamide, or in a polyolefin, such as polyethylene or polypropylene.
